# EUROPÄISCHE PATENTANMELDUNG

(11) **EP 0 529 357 A1**
(43) Veröffentlichungstag der Anmeldung: **03.03.1993**
(21) Anmeldenummer: 92113280.9
(22) Anmeldetag: 04.08.1992
(51) Int. Cl.: G02B 5/32, G02B 6/28, G02B 6/42

(54) **Wellenleiterkopplung mittels Hologramm**

(30) Priorität: 28.08.1991 DE 4128597
(71) Anmelder: SIEMENS AKTIENGESELLSCHAFT, D-80333 München (DE)
(72) Erfinder: Hörmann, Ewald, Dipl.-Ing., W-8150 Holzkirchen (DE); Steinhauser, Karl-August, Dr., W-8000 München 90 (DE); Westhauser, Elmar, Dipl.-Phys., W-8000 München 70 (DE); Patzelt, Klaus, Dipl.-Ing., W-8000 München 70 (DE)

(57) **Zusammenfassung**

In einer Anordnung zur Kopplung eines ein optisches Signal abgebenden Wellenleiters (WL) mit einem das optische Signal aufnehmenden Wellenleiter (SF) wird eine Hologrammplatte (HP) als abbildendes Element verwendet. Besondere Ausgestaltungen sind durch die Verwendung eines Reflexionshologrammes bzw. eines Volumenhologrammes gegeben. Der Einsatz des Volumenhologrammes ermöglicht die Verwendung der Koppelanordnung als wellenlängenselektives Koppelelement. Die Belichtung und Entwicklung des Hologramms erfolgt in einer gegebenüber dem das optische Signal abgebenden Wellenleiter und dem das optische Signal aufnehmenden Wellenleiter fixierten Position wodurch die Koppelanordnung selbstjustierend ist.

## Beschreibung

Die Erfindung betrifft ein Herstellungsverfahren für eine Vorrichtung und eine Vorrichtung zur Kopplung eines Sende-Lichtwellenleiters mit einem Empfangs-Lichtwellenleiter, der das von dem Sendewellenleiter abgegebene optische Signal aufnehmen soll.

In der optischen Nachrichtenübertragung werden die von einem Sender in Form von elektrischen Signalen abgegebenen Signale in optische Signale umgesetzt, über eine optische Nachrichtenstrecke übertragen und empfangsseitig wiederrum in elektrische Signale umgesetzt. Auf der optischen Nachrichtenstrecke ist es oftmals erforderlich, verschiedene Wellenleiter miteinander zu koppeln, die das optische Signal führen sollen. Bei den angesprochenen Wellenleitern kann es sich dabei z. B. um Glasfasern und Wellenleiter von Laserdioden oder Laserverstärkern handeln; die Wellenleiter können auch von unterschiedlichem Ausgangsmaterials wie z. B. Glas oder InP sein.
Herkömmlich wird vorzugsweise zur Koppelung von Wellenleitern, die annähernd gleichen Querschnitt haben, eine sogenannte Stumpfkopplung angewendet, bei der die Stirnflächen der beteiligten Wellenleiter zur Deckung gebracht werden. Weisen die zu koppelnden Wellenleiter unterschiedliche Feldverteilung auf, so werden bevorzugt optische Transformationselemente eingesetzt, die eine Anpassung der unterschiedlichen Feldverteilungen bewirken sollen. Ein optisches Transformationselement kann beispielsweise durch einen Fasertaper gegeben sein, bei dem der Wellenleiter an seinem Ende Linsenform aufweist. Ein anderes optisches Transformationselement kann durch eine Freistrahloptik gegeben sein, bei der zwischen den zu koppelnden Wellenleitern eine optische Linse angeordnet ist.
Die genannten Kopplungsarten erfordern zur Erzielung eines jeweils für sie optimalen Kopplungswirkungsgrades eine exakte Justierung; andererseits kann der Kopplungswirkungsgrad bei Verwendung der genannten optischen Transformationselemente durch Abbildungsfehler vermindert sein.

Der Erfindung liegt das Problem zugrunde, eine Vorrichtung zur Kopplung von Wellenleitern und ein Verfahren zur Herstellung einer solchen Vorrichtung anzugeben, die keines besonderen Justiervorgangs bedarf und einen hohen Kopplungswirkungsgrad aufweist.

Das Problem wird durch ein Verfahren zur Herstellung einer Kopplungseinrichtung der eingangs genannten Art gelöst,
demzufolge eine zunächst unbelichtete Hologrammplatte in Bezug auf den Sendewellenleiter und den Empfangswellenleiter fixiert wird so daß das an der Stirnfläche des Sendewellenleiters abgegebene optische Signal eine Fläche einer Planoberfläche der Hologrammplatte beleuchtet, und
demzufolge eine Hilfseinrichtung so ausgerichtet wird, daß das von ihr abgegebene optische Signal einerseits die genannte Fläche beleuchtet und andererseits in die Stirnfläche des Empfangswellenleiters eingekoppelt wird,
woraufhin die Hologrammplatte mit zwei kohärenten, gegeneinander phasenverschobenen,jeweils über den Sendewellenleiter und die Hilfseinrichtung zugeführten Signalen belichtet wird, die auf der genannten Fläche interferieren, und
demzufolge daraufhin die fixierte Hologrammplatte entwickelt wird.

Die Erfindung bringt den Vorteil der Vermeidung des Aufwands für eine Justierung bei der Herstellung einer Vorrichtung zur Koppelung von Wellenleitern mit sich.

Die Erfindung wird nun als Ausführungsbeispiel in zum Verständnis erforderlichen Umfang anhand von Figuren beschrieben:
Dabei zeigen:
- Fig. 1: eine erfindungsgemäße Anordnung zur Belichtung einer Hologrammplatte,
- Fig. 2: weitere Einzelteile zur Belichtung einer Hologrammplatte nach Figur 1,
- Fig. 3: die Kopplung eines optischen Signals in einer nach dem erfindungsgemäßen Verfahren hergestellten Koppelanordnung,
- Fig. 4: eine nach dem erfindungsgemäßen Verfahren hergestellte Koppelanordnung bei der in den Strahlengang zwei Kugellinsen eingefügt sind,
- Fig. 5: eine nach dem erfindungsgemäßen Verfahren hergestellte Koppelanordnung bei der der das optische Signal aufnehmende Wellenleiter an seinem Ende einen Taper aufweist,
- Fig. 6: eine nach dem erfindungsgemäßen Verfahren hergestellte Koppelanordnung, bei der ein Reflexionshologramm eingesetzt wird und
- Fig. 7: ein nach dem erfindungsgemäßen Verfahren hergestellte Koppelanordnung, bei der für die Hologrammplatte ein Volumenhologramm eingesetzt wird, wodurch die Koppelanordnung wellenlängenselektives Verhalten aufweist.

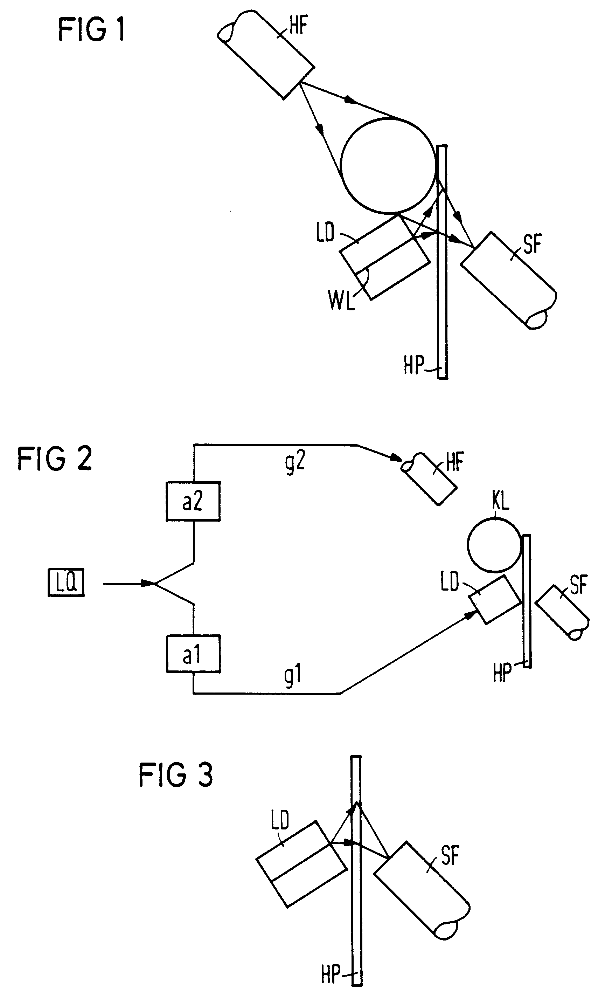

Figur 1 zeigt eine Anordnung, bei der das von einer Laserdiode LD abgegebene optische Signal in eine Systemfaser SF eingekoppelt werden soll. Die Laserdiode LD und die Systemfaser SF sind in Bezug auf die zunächst noch unbelichtete Hologrammplatte HP fixiert. Die Fixierung kann beispielsweise dadurch erfolgen, daß die Laserdiode, die Hologrammplatte und die Systemfaser in durch Anwendung eines Ätzverfahrens gebildete Ausnehmungen eines Siliziumplättchens eingebracht sind. Die Laserdiode und die Systemfaser sind dabei derart zu der Hologrammplatte ausgerichtet, daß der für das optische Signal durch Divergenz bedingte Austrittskegel aus dem Wellenleiter WL der Laserdiode LD und der Eintrittskegel der Systemfaser SF in der aktiven Ebene der Hologrammplatte weitgehend deckungsgleiche Flächen durchdringen. Unter aktiver Schicht soll dabei die Ebene der Hologrammplatte verstanden werden, in der die belichtungsempfindliche bzw. fotorefraktive Schicht liegt.
Eine aus einer Kugellinse KL und einer Hilfsfaser HF bestehende Hilfseinrichtung ist so ausgerichtet, daß das von der Hilfseinrichtung abgegebene optische Signal einerseits die gleiche genannte Fläche der aktiven Schicht der Hologrammplatte durchdringt und andererseits in die Stirnfläche der Systemfaser SF eingekoppelt wird. Diese Bedingungen sind in dem Ausführungsbeispiel dadurch erfüllt, daß das von der Hilfsfaser abgegebene, bedingt durch Divergenz kegelförmig aufgeweitete optische Signal der Kugellinse KL zugeführt wird, wo es durch die Hologrammplatte hindurch auf die Stirnfläche der Systemfaser konzentriert wird. Nach der Entwicklung der Hologrammplatte entsteht auf der der Hilfseinrichtung und dem Wellenleiter abgewandten Seite der Hologrammplatte ein virtuelles Bild der Hilfseinrichtung, wodurch ein von dem Wellenleiter abgegebenes optisches Signal in die Stirnfläche der Systemfaser eingekoppelt wird.

Für die Ausrichtung der Elemente der Koppelanordnung zueinander genügt die im Rahmen für solche Herstellungsvorgänge unter Berücksichtigung von Toleranzen erzielbare Genauigkeit ohne daß gesonderte Justiervorgänge notwendig wäre.

Figur 2 zeigt weitere Komponenten zur Belichtung der Hologrammplatte. Ein von der Lichtquelle LQ abgegebenes kohärentes optisches Signal wird zum einen über eine Abschwächeinrichtung a2 und eine Glasfaser g2 an die mit der Hilfsfaser HF und der Kugellinse KL gebildete Hilfseinrichtung und zum anderen über eine Abschwächeinrichtung a1 und eine Glasfaser g1 der der Hologrammplatte abgewandten Stirnfläche des Wellenleiters der Laserdiode zugeführt. Bezüglich der Länge der verwendeten Glasfasern g1 und g2 ist zu berücksichtigen, daß sich die Längen zueinander so verhalten, daß die über die Glasfasern g1 und g2 übertragenen optischen Signale bei Auftreffen auf die Hologrammplatte die Bedingung der Kohärenz erfüllen. Zur Reduzierung von Dämpfungsverlusten in dem Wellenleiter der Laserdiode kann vorgesehen sein, daß die Laserdiode während des Belichtungsvorgangs mit einem Strom an der Stromschwelle gespeist wird, oberhalb derer die Laserdiode kohärentes Licht abzugeben vermag. Für einen Betrieb der Laserdiode an dieser Schwelle arbeitet die Laserdiode als Verstärker mit einer Verstärkung nahe dem Faktor 1, wodurch Dämpfungsverluste weitgehend unberücksichtigt bleiben können. Mit Hilfe der Dämpfungsglieder a1, a2 wird die Intensität des jeweiligen über die Glasfaser g1 bzw. g2 übertragenen optischen Signals so eingestellt, daß auf der Hologrammplatte Signale gleicher Intensität interferieren. Zur Belichtung weisen also die der Hologrammplatte über die Glasfaser g1 und g2 zugeführten optischen Signale zueinander Kohärenz sowie in etwa gleiche Intensitäten jedoch unterschiedliche Phasen auf. Die Hologrammplatte wird in ansonsten für Hologramme üblicher Weise belichtet. Es sei bemerkt, daß bei dem erfindungsgemäßen Verfahren mit Vorteil ein an sich bekanntes selbstentwickelndes Hologramm zum Einsatz kommen kann, bei dem das Hologramm mit hoher Intensität belichtet wird und dadurch seine charakteristischen optischen Eigenschaften bleibend eingeprägt bekommt. Bei Verwendung eines selbstentwickelndes Hologramms erfolgt die Entwicklung des Hologramms zusammen mit der Belichtung.

Es sei bemerkt, daß die Belichtung der Hologrammplatte zur Einhaltung der Raumwinkelverhältnisse der Koppelanordnung von einer Seite der Hologrammplatte erforderlich ist.

Nach Belichtung der Hologrammplatte wird die Hilfseinrichtung nicht mehr benötigt und kann entfernt werden. Die Entwicklung von nicht-selbstentwickelnden Hologrammen erfolgt in einem nachfolgenden Schritt bei dem die belichtete Emulsion der fotorefraktiven Schicht entwickelt wird; dabei bleibt das Hologramm gegenüber den zu koppelenden Wellenleitern fixiert. Je nach Art der zum Einsatz kommenden Emulsion und des verwendeten Entwicklungsverfahrens läuft der chemische Entwicklungsvorgang entweder naß oder trocken ab.

Figur 3 zeigt eine nach dem erfindungsgemäßen Verfahren hergestellte fertige Anordnung, bei der das von einer Laserdiode abgegebene optische Signal über die als abbildendes Element wirkende Hologrammplatte in die Systemfaser SF eingekoppelt wird. Das von der Laserdiode abgebebene optische Signal wird mit einem hohen Wirkungsgrad auf die Stirnfläche der Systemfaser SF abgebildet.

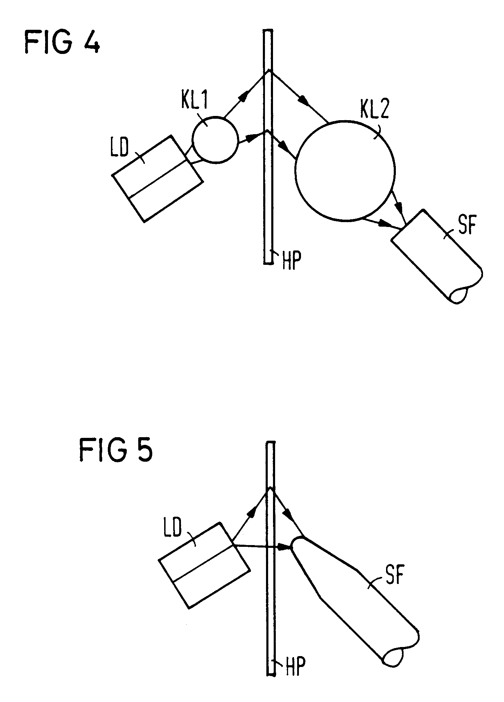

Figur 4 zeigt eine alternative Ausgestaltung einer Koppelanordnung, bei der als optisches Transformationselement in den Strahlengang von der Laserdiode zur Hologrammplatte eine Kugellinse KL1 und in den Strahlengang von der Hologrammplatte zu der Systemfaser SF eine Kugellinse KL2 eingefügt ist. Die Elemente dieser Koppelanordnung die durch die Laserdiode LD, die Kugellinse KL1, die Hologrammplatte HP, die Kugellinse KL2 und die Systemfaser SF gegeben sind, werden vor dem Belichtungsvorgang in eine feste räumliche Beziehung gebracht, was beispielsweise durch eine Fixierung der Elemente in dafür vorgesehene Ausnehmungen eines Siliziumplättchens erfolgen kann.

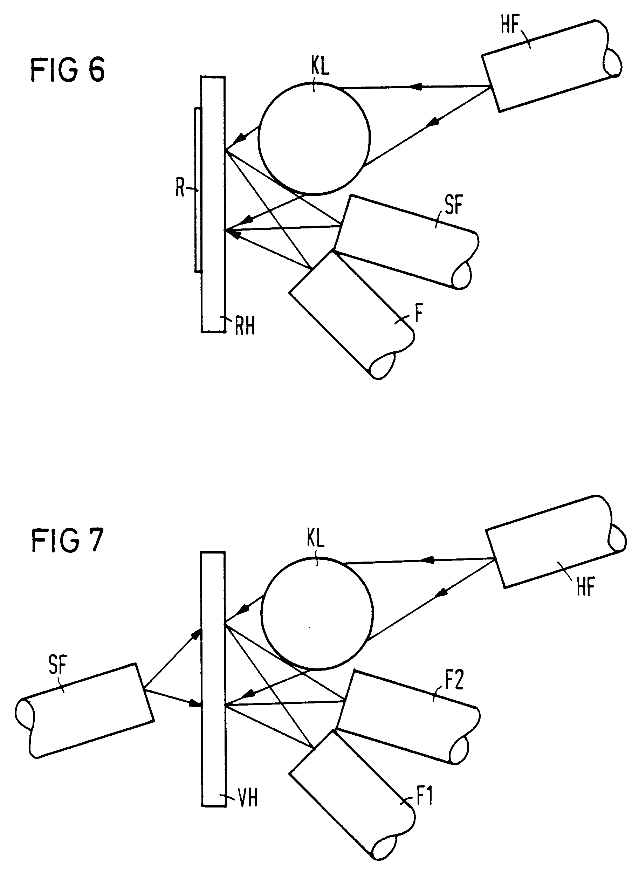

Figur 5 zeigt eine weitere alternative Ausgestaltung einer Koppelanordnung, bei der die Systemfaser SF an ihrem Ende einen sogenannten Taper aufweist, der als optisches Transformationselement wirkt.
Bei den Koppelanordnungen nach Figur 4 und 5 wird eine ausreichend genaue Ausrichtung der Einzelelemente untereinander erzielt, wenn die Einzelelemente mit einer für solche Herstellungsvorgänge unter der Berücksichtigung von Toleranzen erzielbaren Genauigkeit, beispielsweise in eine für ein jeweiliges Einzelelement vorgesehene Ausnehmung eines Siliziumplättchens eingefügt werden. Es sei darauf hingewiesen, daß für die jeweils im fertigen Zustand dargestellten Koppelanordnungen nach Figur 4 und 5 der Belichtungs- und Entwicklungsvorgang in prinzipiell gleicher Weise wie für die Koppelanordnung gemäß Figur 1 beschrieben erfolgen kann.

Figur 6 zeigt eine erfindungsgemäße Koppelanordnung, bei der als abbildendes Element ein Reflexionshologramm RH verwendet wird. Bei dem Reflexionshologramm handelt es sich um eine Hologrammplatte bei der eine Planfläche mit einer reflektierenden Schicht R versehen ist. Zu dem Reflexionshologramm ist wiederum eine Systemfaser SF und eine Faser F fixiert, wobei die Kegel des von der Faser F abgegebenen optischen Signals bzw. des von der Systemfaser aufgenommenen optischen Signals die gleiche Fläche des Reflexionshologramms ausleuchten. Zur Belichtung des Reflexionshologramms wird beispielsweise eine mit einer Hilfsfaser HF und einer Kugellinse KL gebildete Hilfseinrichtung verwendet, die so ausgerichtet ist, daß das von der Hilfseinrichtung abgegebene optische Signal einerseits die gleiche Fläche wie die von der Faser F und der Systemfaser SF ausgeleuchteten Fläche des Reflexionshologramms ausleuchtet und andererseits von dem noch nicht entwickelten Reflexionshologramm in die Systemfaser SF eingekoppelt wird. Der Entwicklungsvorgang läuft in analoger Weise zu den oben beschriebenen Vorgängen ab. Das Reflexionshologramm weist den Vorteil auf, daß die das optische Signal abgebenden bzw. aufnehmenden Wellenleiter auf nur einer Seite des Reflexionshologramms angeordnet sind.

Figur 7 zeigt eine nach dem erfindungsgemäßen Herstellungsverfahren erzeugte Koppelanordnung, bei der ein Volumenhologramm VH als abbildendes Element eingesetzt wird. Ein solches Volumenhologramm weist eine Mehrzahl von aktiven Ebenen auf. Der Einsatz des Volumenhologramms ermöglicht die Verwendung der Koppelanordnung als wellenlängenselektives Element. Die Koppelanordnung nach Figur 7 weist neben dem Volumenhologramm VH eine Systemfaser SF und eine Mehrzahl von Fasern F1, F2 auf, wobei die Elemente wiederrum gegeneinander fixiert sind. Die Kegel des von den Fasern bzw. der Systemfaser abgegebenen bzw. aufgenommenen optischen Signals schneiden das Volumenhologramm in einer Fläche. Der Belichtungsvorgang des Volumenhologramms läuft derart ab, daß die genannte Fläche des Volumenhologramms von einer Mehrzahl von Fasern F1, F2 mit jeweils einem optischen Signal unterschiedlicher Wellenlänge und einem von einer Hilfseinrichtung abgegebenen optischen Signal belichtet wird. Die Hilfseinrichtung, die mit einer Kugellinse KL und einer Hilfsfaser HF gebildet ist, ist so ausgerichtet, daß das von ihr abgegebene optische Signal einerseits die genannte Fläche des Volumenhologramms ausleuchtet und zum anderen in die Systemfaser SF eingekoppelt wird. Das von der Hilfseinrichtung abgegebene optische Signal ist ein Summensignal, das jeweils ein optisches Signal gleicher Intensität und Wellenlänge wie die jeweils von der Mehrzahl der Fasern abgegebenen optischen Signale aufweist. Nach der Entwicklung des Volumenhologramms, die in herkömmlicher Weise erfolgen kann, ist es aufgrund der Umkehrbarkeit des Lichtweges möglich, zum einen optische Signale unterschiedlicher Wellenlänge, die jeweils über eine eigene Faser F1, F2 herangeführt werden, in die Systemfaser SF einzukoppeln und als Summensignal weiterzuführen bzw. zum anderen ein eine Mehrzahl unterschiedlicher Wellenlängen aufweisendes Summensignal, das über die Systemfaser SF herangeführt wird in Abhängigkeit von der Wellenlänge in Einzelsignale mit jeweils einer einzigen Wellenlänge aufzuteilen, die jeweils einer Faser F1, F2 zugeführt und dort weitergeleitet werden. Bei Verwendung eines Volumenhologramms in der erfindungsgemäßen Koppelanordnung ist es also möglich, eine selbstjustierende wellenlängenselektive Koppelanordnung zu realisieren.

## Patentansprüche

1. Herstellungsverfahren für eine Vorrichtung zur Koppelung eines Sende-Lichtwellenleiters mit einem Empfangs-Lichtwellenleiter, der das von dem Sendewellenleiter abgegebene optische Signal aufnehmen soll,
demzufolge eine zunächst unbelichtete Hologrammplatte in Bezug auf den Sendewellenleiter und den Empfangswellenleiter fixiert wird, so daß das an der Stirnfläche des Sendewellenleiters abgegebene optische Signal eine Fläche einer Planoberfläche der Hologrammplatte beleuchtet, und
demzufolge eine Hilfseinrichtung so ausgerichtet wird, daß das von ihr abgegebene optische Signal einerseits die genannte Fläche beleuchtet und andererseits in die Stirnfläche des Empfangswellenleiters eingekoppelt wird,
woraufhin die Hologrammplatte mit zwei zueinander kohärenten, gegeneinander phasenverschobenen, jeweils über den Sendewellenleiter und die Hilfseinrichtung zugeführten Signalen belichtet wird, die auf der genannten Fläche interferieren, und demzufolge die fixierte Hologrammplatte entwickelt wird.

2. Herstellungsverfahren nach Anspruch 1,
demzufolge die Hologrammplatte naß entwickelt wird.

3. Herstellungsverfahren nach Anspruch 1,
demzufolge die Hologrammplatte trocken entwickelt wird.

4. Herstellungsverfahren nach Anspruch 1,
demzufolge das Hologramm auf einer selbstentwickelnden Hologrammplatte gebildet wird, wozu der die Entwicklung einschließende Belichtungsvorgang mit Signalen hoher Intensität erfolgt.

5. Herstellungsverfahren nach einem der vorstehenden Ansprüche, demzufolge in den Strahlengang des abgegebenen und/oder aufgenommenen optischen Signals ein optisches Transformationselement eingefügt ist.

6. Herstellungsverfahren nach Anspruch 5,
demzufolge das Transformationselement durch eine Kugellinse gegeben ist.

7. Herstellungsverfahren nach Anspruch 5,
demzufolge das Transformationselement durch einen Fasertaper gegeben ist.

8. Herstellungsverfahren nach einem der vorstehenden Ansprüche, demzufolge auf der Hologrammplatte ein Reflexionshologramm gebildet wird.

9. Herstellungsverfahren nach einem der vorstehenden Ansprüche, demzufolge auf der Hologrammplatte ein Volumenhologramm gebildet wird.

10. Vorrichtung zur Koppelung eines Sende-Lichtwellenleiters mit einem Empfangs-Lichtwellenleiter, der das von dem Sendewellenleiter abgegebene optische Signal aufnehmen soll, mit einer Hologrammplatte,
die, zunächst unbelichtet, in Bezug auf den Sendewellenleiter und den Empfangswellenleiter fixiert ist, so daß das an der Stirnfläche des Sendewellenleiters abgegebene optische Signal eine Fläche einer Planoberfläche der Hologrammplatte beleuchtet, wobei das von einer Hilfseinrichtung abgegebene optische Signal einerseits die genannte Fläche beleuchtet und andererseits in die Stirnfläche des Empfangswellenleiters eingekoppelt wird, und die, nachfolgend belichtet mit zwei zueinander kohärenten, ggf. gegeneinander phasenverschobenen, jeweils über den Sendewellenleiter und die Hilfseinrichtung zugeführten Signalen, die auf der genannten Fläche interferieren, derart fixiert entwickelt wurde.

11. Vorrichtung nach Anspruch 10 in Verbindung mit Anspruch 9,
**dadurch gekennzeichnet,**
daß die Koppelanordnung eine Mehrzahl von Sendewellenleitern oder Empfangswellenleitern aufweist und ein wellenlängenselektives Vielkanalsystem bildet.
